# FASCICULE DE BREVET EUROPEEN

(11) **EP 0 412 858 B1**
(45) Date de publication et mention de la délivrance du brevet: **01.06.1994**
(21) Numéro de dépôt: 90401859.5
(22) Date de dépôt: 28.06.1990
(51) Int. Cl.: H02K 5/128, H02K 5/08

(54) **Groupe Motopompe électrique à tube d'entrefer**
Elektrische Motorpumpe mit Spaltrohr
Electrical motor-pump with air-gap sleeve

(30) Priorité: 11.08.1989 FR 891089
(43) Date de publication de la demande: 13.02.1991
(73) Titulaire: POMPES SALMSON Société Anonyme à directoire dite:, 92504 Rueil Malmaison (FR)
(72) Inventeur: Trian, Hervé,, 53260 Parne sur Roc (FR)
(74) Mandataire: Hirsch, Marc-Roger

(56) Documents cités:
- DE-A- 1 488 506
- DE-A- 1 935 929
- DE-A- 2 744 856
- DE-A- 2 751 516
- DE-B- 1 097 543
- DE-C- 612 714
- FR-A- 806 908
- FR-A- 1 163 937
- FR-A- 1 271 861
- FR-A- 2 207 378
- US-A- 2 385 385
- US-A- 3 333 544

## Description

La présente invention se rapporte à un groupe motopompe dont le moteur électrique à induction comprend un stator et un rotor monté en porte-à-faux de façon étanche à l'intérieur d'un tube d'entrefer sur un carter du rotor de pompe, un palier avant étant commun au rotor du moteur électrique et au rotor de pompe et le stator étant encapsulé dans une enveloppe isolante fermée sur le circuit magnétique et sur les spires de bobinage du moteur et ouverte sur toute la section d'entrefer pour recevoir le rotor logé dans le tube d'entrefer.

Les moteurs électriques à induction constituent de loin les moteurs électriques les plus simples à construire et qui présentent le meilleur rendement lorsqu'ils fonctionnent en continu dans des conditions de vitesse normale c'est-à-dire pas trop éloignées de leur vitesse de synchronisme avec la fréquence de leur réseau électrique d'alimentation. Le circuit magnétique de stator est en généralement constitué d'un empilement de tôles découpées dans la même tôle magnétique de départ pour constituer un moteur complet dont le rotor est en principe apte à résister à toutes les surchauffes car son circuit électrique en cage d'écureuil est actuellement formé de barreaux de cuivre ou d'aluminium directement au contact des tôles rotor non isolées. Le circuit stator qui supporte la tension du réseau dans plusieurs bobinages isolés les uns des autres est par contre beaucoup plus fragile et encombrant car il entoure le rotor dans la plupart des applications et le problème de son remplacement se pose beaucoup plus fréquemment que celui du rotor qui risque plutôt des difficultés au niveau de ses paliers de roulement.

FR-A-806 908 décrit un moteur électrique submergé, notamment pour des pompes pour puits profonds et dont les enroulements statoriques sont logés de façon étanche dans un système tubulaire bridé aux deux extrémités et formant une enveloppe tubulaire d'une pièce obtenue en moulant ou injectant directement, sans aucune transformation préliminaire, dans le stator, une matière plastique telle que de la bakélite qui, en se solidifiant, est amenée à la forme définitive de l'enveloppe tubulaire. Selon un mode de réalisation voisin connu décrit dans US-A-2 385 385, un stator de moteur électrique étanche aux liquides présente un bobinage stator complètement encapsulé dans un matériau moulable du type "Catalin" assurant l'isolation électrique complémentaire de ce bobinage et l'isolation totale de ce dernier à l'égard de l'eau et des liquides. Un tel stator n'est pas enfilé au contact d'un tube d'entrefer comme dans le mode de réalisation envisagé pour la présente invention.

On connaît par ailleurs de FR-A-1 271 861, un groupe motopompe à moteur électrique dans lequel la carcasse du moteur électrique est réunie à des éléments constitués du tube d'entrefer solidaire du palier arrière et d'un col à bouchon "en la posant simplement sur lui et en la fixant au moyen d'un écrou". La carcasse du moteur est ainsi serrée axialement par l'écrou sur le couvercle.

Ces moteurs électriques selon l'état de la technique présentent l'inconvénient de ne pas permettre l'échange rapide librement orientable et sûr du stator du moteur électrique lorsque ce stator constitue la pièce la plus susceptible de panne, d'incident ou d'usure dans un groupe motopompe.

La présente invention a pour but de permettre de proposer un groupe motopompe dont le stator de moteur électrique à induction puisse s'échanger aisément, indépendamment de son rotor relié au rotor de pompe et complètement isolé du stator par une paroi étanche. Le stator du groupe motopompe selon l'invention doit être, du fait de son caractère amovible, léger, aisé et économique à fabriquer, tout en présentant des qualités exceptionnelles de compacité, d'isolation électrique et d'étanchéité.

A cet effet, selon l'invention, ladite enveloppe isolante est surmoulée sur le circuit magnétique et comporte sur chacune des faces d'extrémité de stator au moins un manchon concentrique à l'entrefer, entourant les têtes ou chignons de bobine et coopérant avec un capot d'extrémité isolant monté sur ce(s) manchon(s) pour encapsuler les têtes de bobine et le stator est enfilé sur le tube d'entrefer de façon amovible en venant porter par sa surface d'entrefer sur le tube d'entrefer et s'appliquer par le capot et/ou le manchon isolant d'extrémité avant sur le carter du rotor de pompe tandis que le capot isolant d'extrémité arrière comporte un flasque qui vient en appui sur un support du palier arrière du rotor, solidaire du tube d'entrefer. Le moteur électrique du groupe motopompe selon l'invention n'est plus à considérer comme l'ensemble d'un rotor placé dans un stator logé dans une carcasse ou enveloppe mais comme le montage, au gré des besoins et dans les positions particulières souhaitées, d'un stator qui vient entraîner un rotor déjà en place de façon difficilement amovible (remplacé uniquement en cas de dégradation de l'organe mécanique tournant entraîné en rotation par le rotor).

Selon un autre mode de réalisation, ledit capot isolant arrière vient en appui sur ledit support par l'intermédiaire d'un joint annulaire d'étanchéité tandis que ledit manchon et/ou capot isolant avant est flasqué de façon étanche sur le carter du rotor de pompe, de manière à isoler le circuit de stator de l'extérieur. Un bouchon amovible de la chambre arrière de l'arbre de moteur électrique reliée au circuit de fluide de la pompe, est vissé sur ledit support de palier arrière et vient en appui d'étanchéité sur le joint annulaire d'étanchéité servant à l'appui étanche du capot isolant arrière sur le support de palier.

Selon un autre mode de réalisation encore plus simple, le manchon ou le capot isolant d'extrémité avant est engagé à frottement au contact d'une couche annulaire d'élastomère prévue à l'intérieur d'une bague de retenue solidaire du corps de pompe, de manière à réaliser une liaison étanche sur la face frontale du corps de pompe et la retenue par friction du stator librement orientable en rotation avant son engagement sur ledit corps de pompe. Au moins l'un des manchons ou l'un des capots d'extrémité est traversé par les fils de liaison des bobinages du stator à une alimentation électrique extérieure.

Selon un autre mode de réalisation encore plus compact, au moins l'un des manchons isolants d'extrémité est relié à une carcasse isolante entourant extérieurement la culasse du circuit magnétique et porte une boîte de connexion au réseau électrique et/ou à un réseau de régulation du moteur électrique.

L'invention concerne ainsi un groupe motopompe électrique comportant un stator et un rotor de moteur électrique monté en porte-à-faux de façon étanche à l'intérieur d'un tube d'entrefer sur un carter du rotor de pompe, comprenant un palier avant commun au rotor du moteur électrique et au rotor de pompe. Dans un tel groupe motopompe, le stator est enfilé sur le tube d'entrefer du rotor de façon amovible en venant se flasquer ou s'appliquer, par le premier boîtier isolant d'extrémité, sur le carter de rotor de pompe tandis que le second capot isolant d'extrémité vient en appui sur un support du palier arrière de rotor, solidaire du tube d'entrefer. Le second boîtier vient en appui sur le support de palier arrière par l'intermédiaire d'un joint annulaire d'étanchéité tandis que le premier boîtier isolant est flasqué (fixé en bout) de façon étanche sur le carter du rotor de pompe, de manière à isoler le circuit de stator de l'extérieur.

D'autres buts, avantages et caractéristiques apparaîtront à la lecture de la description d'un mode de réalisation de l'invention, faite à titre non limitatif et en regard du dessin annexé dans lequel:
- la figure 1 représente en coupe longitudinale un moteur électrique selon l'invention, appliqué à un groupe motopompe à tube d'entrefer;
- la figure 2 représente, également en coupe longitudinale et à plus petite échelle, le groupe motopompe de la figure 1 au moment de la séparation entre le stator et le rotor du moteur électrique;
- la figure 3 représente en coupe longitudinale et en vue fragmentaire un autre mode de réalisation du stator selon l'invention.

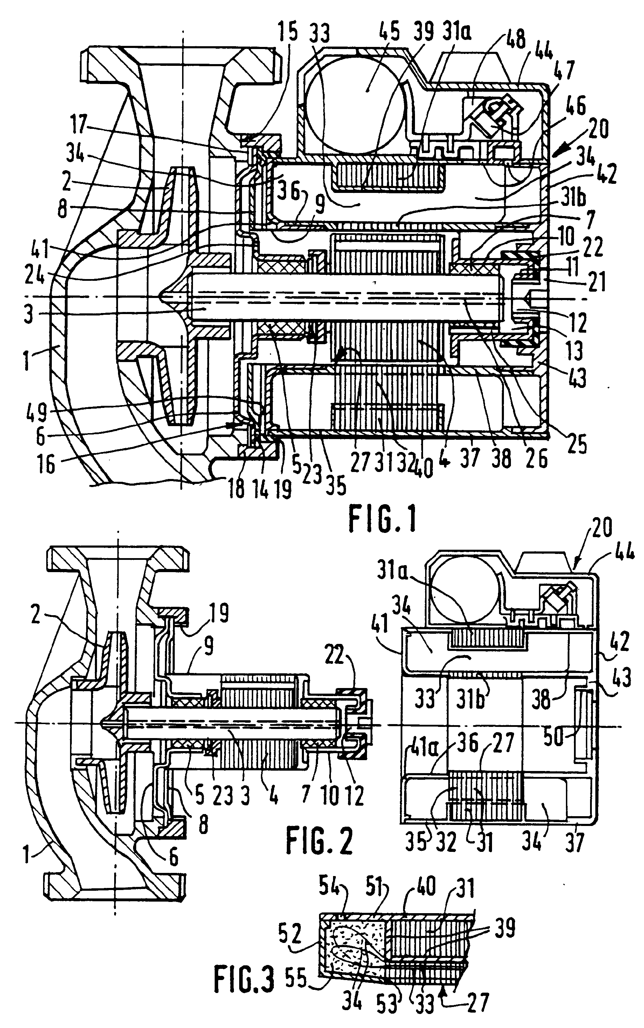

On a représenté sur la figure 1 un corps de pompe 1 dans lequel est monté un rotor de pompe 2 solidaire d'un arbre 3 commun au rotor de pompe 2 et au rotor 4 du moteur électrique. L'arbre 3 est supporté ici par deux paliers lisses en graphite: un palier avant 5 porté par un flasque avant 6 réalisé en tôle d'acier inoxydable et un palier arrière 7. Le flasque avant 6 qui doit résister à la pression du fluide véhiculé par la pompe est réalisé en double épaisseur et présente une plaque annulaire extérieure 8 solidaire d'un tube d'entrefer mince 9 en matériau amagnétique, par exemple en acier inoxydable. Le tube d'entrefer 9 se referme et se raccorde à l'arrière sur un manchon plus épais 10 qui porte le palier arrière 7 et présente un rebord extérieur 11 fileté intérieurement pour recevoir un bouchon 12 de fermeture de la chambre d'arbre 13 reliée à l'aspiration de la pompe pour le retour des débits de fluide circulant à travers les paliers et l'entrefer.

Le flasque avant 6 et la plaque annulaire 8 sont montés serrés de façon étanche, avec interposition d'un joint d étanchéité annulaire 14 entre eux, sur une face ouverte 15 du corps 1 pour venir obturer la grande ouverture 16 de cette face 15. Le montage du flasque avant 6 s'effectue en interposant un joint d'étanchéité annulaire plat 17 entre une portée correspondante de la face 15 et le rebord extérieur plat de ce flasque tandis que la plaque annulaire 8 est emprisonnée par une bague de retenue 18 fixée sur la face 15 par tout moyen, par exemple par des vis non représentées, de façon à appliquer le rebord extérieur du flasque 6 sur le joint annulaire plat 17. Selon une disposition propre à la présente invention, la bague de retenue 18 est garnie sur sa face intérieure avant dirigée vers le stator 20 du moteur électrique d'une couche d'élastomère 19 très fortement adhérisée au matériau de la bague 18.
Le bouchon 12 vissé dans le rebord intérieur 11 du manchon 10 vient s'appliquer de façon étanche par un rebord annulaire 21 sur un chapeau en élastomère 22.

Une butée axiale de palier 23 est interposée entre le rotor 4 du moteur électrique et le palier avant 5, l'ensemble du rotor de pompe 2 et du rotor 4 étant normalement repoussé en butée sur le palier avant 5 par la poussée axiale du rotor de pompe 2. Une liaison de circulation de liquide est établie entre le côté en surpression de la pompe et la chambre d'arbre 13 via un passage 24 ménagé dans le flasque 6, le passage annulaire d'entrefer entre le rotor 4 et le tube d'entrefer 9 et des passages périphériques 25 entre le palier arrière 7 et le manchon 10. Le fluide amené à la chambre d'arbre 13 retourne à l'aspiration de la pompe via un passage central 26 de l'arbre 3 et du rotor 2.

L'ensemble de corps de pompe et de rotor qui apparaît sur la partie de gauche de la figure 2 est étanche et stable mécaniquement car les paliers 5 et 7 du rotor sont portés respectivement par le flasque avant 6 et par le tube d'entrefer 9 relié à la plaque annulaire 8, les deux éléments de flasque étant fixés rigidement par leur périphérie sur la face 15 de l'ouverture 16 du corps de pompe. Pour être entraîné en rotation, le rotor 4 doit être soumis à un champ magnétique tournant produit par un stator de moteur à induction.

Le stator 20 du moteur électrique, représenté séparé à droite de la figure 2, se compose d'un paquet 31 de tôles magnétiques minces empilées et dans lequel sont formées des encoches longitudinales 32 recevant les parties sensiblement rectilignes et actives 33 des spires de bobinages. Les têtes ou chignons de bobine 34 qui dépassent hors du circuit magnétique 31 sont logés, au moment de la mise en place des bobinages dans le circuit magnétique, entre deux manchons 35 et 36, d'un côté du circuit magnétique, et respectivement 37 et 38 de l'autre côté du circuit magnétique (du côté opposé au rotor de pompe 2). Les manchons intérieurs 36 et 38, par exemple solidaires d'un isolant d'encoche 39 (voir le haut de la figure 1), sont surmoulés sur la zone de l'entrefer et des passages vers les encoches qu'ils prolongent latéralement tandis que les manchons extérieurs 35 et 37 prolongent une carcasse 40 formant l'enveloppe extérieure du circuit magnétique du stator 31.

Après la mise en place des bobinages et leur enrobage éventuel (compoundage) par un produit isolant et durcissant, les têtes de bobine 34 sont encapsulées de chaque côté dans un boîtier isolant fermé. Du côté du rotor de pompe 2, le boîtier isolant est constitué des couples de manchons isolants 35 et 36 fermés en bout par un capot isolant avant 41 ouvert sur toute la section d'entrefer pour recevoir le tube d'entrefer 9. Du côté arrière, c'est-à-dire éloigné du rotor de pompe 2, le boîtier isolant est constitué des manchons isolants 37 et 38 fermés en bout par un capot arrière 42 qui comporte un flasque 43 d'appui indirect du stator 20 sur le palier de rotor arrière 7. Le flasque 43 s'appuie en fait par un alésage 50 sur la face cylindrique extérieure et sur la face frontale avant du chapeau en élastomère 22 recouvrant le manchon 10 et retenu par le rebord 21 du bouchon 12.

La carcasse en matériau isolant 40 de la culasse 31a du circuit magnétique 31 (on considère que le circuit magnétique 31 est constitué d'une partie d encoches 31b et d'une partie de culasse 31a reliées radialement entre elles) porte ici de façon monobloc une boîte de connexion 44 au réseau électrique d'alimentation du stator. On peut venir loger dans la boîte 44 un condensateur 45 relié à la phase auxiliaire du stator lorsque le réseau d'alimentation électrique est monophasé. Le passage des fils de liaison entre la boîte de connexion 44 et les têtes de bobine 34 est ménagé dans des trous 46 prévus dans le manchon 37 constituant le boîtier arrière des têtes de bobines. La boîte de connexion 44 comporte habituellement des broches ou griffes de connexion ou des pattes de serrage de fils électriques 47 mais peut inclure également des bornes ou broches de régulation de vitesse 48.

Le montage du stator 20 sur le bloc rotor représenté à gauche de la figure 2 s'effectue par simple enfilage sur le tube d'entrefer 9. La partie conique d entrée 41a du capot avant 41 permet de bien centrer le capot 41 sur le tube d'entrefer 9 et d'amener l'alésage d'entrefer stator 27 juste en face du rotor 4 et à proximité immédiate de la surface extérieure du tube d'entrefer 9 qu'il peut venir toucher en quelques points. Dans cette position d'ajustement axial des surfaces d'entrefer stator et rotor et par conséquent des circuits magnétiques stator et rotor, le manchon extérieur 35 vient s'engager à frottement au contact de la couche annulaire d'élastomère 19 prévue à l'intérieur de la bague de retenue 18. Le contact entre le manchon 35 et la couche d'élastomère 19 assure simultanément deux fonctions: d'une part l'étanchéité sur la face frontale 15 du corps de pompe, complétée le cas échéant par un joint annulaire 49, d'autre part, la retenue en position par friction sur la bague 18 solidaire du corps 1. On notera que le stator 20 peut être orienté librement en rotation par rapport au corps de pompe 1 avant d'être engagé par le manchon 35 à l'intérieur de la bague 18.

Selon un autre aspect de l'invention, le stator 20 qui vient porter par le manchon extérieur avant 35 sur la bague 18 et par sa surface d'entrefer 27 sur le tube d'entrefer 9, porte également sur le chapeau en élastomère 22 par l'alésage intérieur 50 qui assure le centrage arrière du stator 20 par rapport au tube d'entrefer 9. En prévoyant une couche d'élastomère relativement épaisse sous le rebord 21, il serait possible d'assurer la retenue du capot arrière 42 par le chapeau 22 en prévoyant le montage ajusté de l'alésage de ce capot sur le chapeau 22 en élastomère. En comprimant le chapeau 22 par le rebord 21, l'élastomère comprimé se comporte alors comme un fluide hydrostatique et gonfle radialement, ce qui bloque le capot arrière 42 en position par friction tout en laissant, du fait de la grande élasticité de l'élastomère, une possibilité de déplacement et en amortissant les vibrations.

Pour maintenir le stator en position axiale, on peut également prévoir que le rebord 21 du bouchon 12 vient en appui sur un rebord conjugué du capot arrière 42. Les deux capots des boîtiers qui encapsulent les têtes de bobines sont de préférence ajustés sur des portées cylindriques des manchons et peuvent être collés au moment de l'ajustement pour interdire toute séparation et obtenir que l'ensemble d'un stator 20 se comporte comme un bloc indissociable. Le capot avant 41 peut comporter un flasque permettant la fixation par vis du stator 20 sur le corps de pompe 1 et son centrage par rapport au rotor 4 lorsqu il n'existe pas de tube d'entrefer.

On a représenté sur la figure 3 une variante de boîtier où l'on utilise un seul manchon extérieur 51 monobloc avec la couche d'isolation surmoulée 39 de l'isolant d'encoche qui recouvre également les extrémités du circuit magnétique 31. Le boîtier est fermé par un capot 52 qui s'appuie sur l'extrémité du manchon 51 et sur une zone annulaire 53 de la face latérale du circuit magnétique au voisinage du débouché de la surface d'entrefer, c'est-à-dire au niveau où les tôles d'encoche s'élargissent pour couvrir la plus grande partie de la surface d'entrefer. La zone annulaire 53 étant en général recouverte de la couche d'isolation surmoulée 39 en une matière plastique isolante électrique apte à être collée ou soudée, le capot 52 sera collé ou soudé, notamment par soudure aux ultra-sons particulièrement adaptée à la matière plastique isolante électrique, respectivement au manchon 51 et à la couche d'isolation d'encoche dans la zone annulaire 53, en enfermant les têtes de bobines 34. Les espaces libres entre les têtes de bobines 34 et le boîtier peuvent être remplis, via une ouverture 54 ménagée par exemple dans le manchon 51, d'un produit ou compound durcissant 55 qui bloque les têtes de bobine 34 en position dans le boîtier.

Les boîtiers qui encapsulent les têtes de bobines peuvent être réalisés indépendamment de tout manchon entourant les têtes de bobine et venir s'appuyer directement sur la culasse du circuit magnétique de stator mais, dans tous les cas, ils doivent ménager une entrée axiale pour glisser le rotor dans le stator ou plutôt, comme représenté sur les figures 1 et 2, pour permettre d'introduire axialement le stator autour du rotor ou de l'extraire. Le stator 20 est raccordé au réseau électrique d'alimentation et de réglage par tout moyen y compris par ceux représentés à la figure 1 et peut notamment être déjà raccordé à des fils d'alimentation au moment où il est monté sur le rotor et orienté en rotation avant d'être bloqué sur un support commun au rotor et au stator tel que le corps de pompe 1. Les circuits électriques peuvent également, comme dans un moteur électrique classique, être réalisés après la mise en place du stator.

## Revendications

1. Groupe motopompe dont le moteur électrique à induction comprend un stator (20) et un rotor (4) monté en porte-à-faux de façon étanche à l'intérieur d'un tube d'entrefer (9) sur un carter (1) du rotor de pompe (2), un palier avant (5) étant commun au rotor (4) du moteur électrique et au rotor de pompe (2) et le stator (20) étant encapsulé dans une enveloppe isolante fermée sur le circuit magnétique (31) et sur les spires de bobinage (33, 34) du moteur et ouverte sur toute la section d'entrefer pour recevoir le rotor (4) logé dans le tube d'entrefer (9), caractérisé en ce que ladite enveloppe isolante est surmoulée sur le circuit magnétique et comporte sur chacune des faces d'extrémité de stator au moins un manchon (35, 36; 37, 38) concentrique à l'entrefer, entourant les têtes ou chignons de bobine (34) et coopérant avec un capot d'extrémité isolant (41, 42) monté sur ce(s) manchon(s) pour encapsuler les têtes de bobine (34) et en ce que le stator (20) est enfilé sur le tube d'entrefer (9) de façon amovible en venant porter par sa surface d'entrefer (27) sur le tube d'entrefer (9) et s'appliquer par le capot et/ou le manchon isolant d'extrémité avant (41; 35, 36) sur le carter (1) du rotor de pompe (2) tandis que le capot isolant d'extrémité arrière (42) comporte un flasque (43) qui vient en appui sur un support (10) du palier arrière (7) du rotor, solidaire du tube d'entrefer (9).

2. Groupe motopompe selon la revendication 1, caractérisé en ce que ledit capot isolant arrière (42) vient en appui sur ledit support (10) par l'intermédiaire d'un joint annulaire d'étanchéité (22) tandis que ledit manchon (35, 36) et/ou capot isolant avant (41) est flasqué de façon étanche sur le carter (1) du rotor de pompe, de manière à isoler le circuit de stator de l'extérieur.

3. Groupe motopompe selon la revendication 2, caractérisé en ce qu'un bouchon amovible (12) de la chambre arrière (13) de l'arbre de moteur électrique (3) reliée au circuit de fluide de la pompe, est vissé sur ledit support (10) de palier arrière et vient en appui d'étanchéité sur le joint annulaire d'étanchéité (22) servant à l'appui étanche du capot isolant arrière (42) sur le support de palier (10).

4. Groupe motopompe selon au moins l'une des revendications 1 à 3, caractérisé en ce que le manchon (35) ou le capot (41) isolant d'extrémité avant est engagé à frottement au contact d'une couche annulaire d'élastomère (19) prévue à l'intérieur d'une bague de retenue (18) solidaire du corps de pompe (1), de manière à réaliser une liaison étanche sur la face frontale (15) du corps de pompe (1) et la retenue par friction du stator (20) librement orientable en rotation avant son engagement sur ledit corps de pompe.

5. Groupe motopompe selon au moins l'une des revendications 1 à 4, caractérisé en ce qu'au moins l'un des manchons (35, 36; 37, 38) ou l'un des capots d'extrémité (41, 42) est traversé (en 46) par les fils de liaison des bobinages (34) du stator à une alimentation électrique extérieure.

6. Groupe motopompe selon au moins l'une des revendications 1 à 5, caractérisé en ce qu'au moins l'un des manchons isolants d'extrémité est relié à une carcasse isolante (40) entourant extérieurement la culasse (31a) du circuit magnétique (31) et porte une boîte de connexion (44) au réseau électrique et/ou à un réseau de régulation du moteur électrique.

## Claims

1. An electric motor-driven pump having an electric induction motor comprising a stator (20) and a rotor (4) sealingly mounted in cantilevered fashion inside an air gap tube or sleeve (9) on a housing (1) of said pump rotor, a front bearing (5) being common to the rotor (4) of said electric motor and the rotor of said pump (2), and said stator (20) being encapsulated inside an insulating enveloping structure closed on the magnetic circuit (31) and on the turns of the motor winding (33, 34) and open over the whole of the cross-section of the air gap in order to receive the rotor (4) which is housed in the rotor tube (9), characterized in that said enveloping insulating structure is insert-molded over said magnetic circuit and includes at each of the stator end faces at least one sleeve portion (35, 36; 37, 38) concentric with the air gap and surrounding the end winding parts or overhang (34) and cooperating with an insulating end cover (41, 42) fitted onto said sleeve portion(s) in order to encapsulate the said end winding parts (34),and in that the stator (20) is inserted over the air gap tube (9) in a removable manner and coming to bear, via its air gap surface (27), on said air gap tube (9) while coming to fit, via said sleeve portion and/or insulating front end cover (41; 35, 36), against said pump rotor (2) housing (1) while the rear insulating end cover (42) includes a flanged portion (43) that comes into abutment with a rear rotor bearing (7) support (10) that is integral with said air gap tube (9).

2. Motor-driven pump assembly according to claim 1, characterized in that said rear insulating end cover (42) comes into abutment with said rear bearing support (10) via the intermediary of an annular sealing gasket (22) while said sleeve portion (35, 36) and/or said front insulating end cover (41) is flanged in a sealing manner onto the pump rotor housing (1) whereby the stator circuit is separated from the outside.

3. Motor driven pump assembly according to claim 2, characterized in that a removable plug or closing member (12) of the rear chamber (13) of the electric motor shaft (3) joined to the pump fluid circulation circuit is screwed onto said rear bearing support (10) and comes into sealed abutment with said annular sealing gasket (22) acting as a sealed support surface for said second insulating end cover (42) on said bearing support (10).

4. Motor-driven pump assembly according to at least one of claims 1 to 3, characterized in that the outer sleeve (35) or the front end insulating housing (41) is frictionally engaged in contact with an annular elastomer layer (19) provided inside a retaining ring (18) integral with said pump body (1) whereby a sealed joint is established at the front side (15) of said pump body (1), and said stator (20) which, prior to its engagement onto said pump body can be freely rotationally oriented, is frictionally maintained in position.

5. Motor-driven pump assembly according to at least one of claims 1 to 4, characterized in that at least one of said sleeve portions (35, 36; 37, 38) or one of said end covers (41, 42) has provision for passage therethrough (at 46) of the wires connecting the windings (34) of the motor to an external source of electrical power.

6. Motor-driven pump assembly according to at least one of claims 1 to 5, characterized in that at least one of the end insulating sleeve portions is joined to an insulating yoke ring (40) externally surrounding the magnetic circuit (31) yoke (31a) and carrying a terminal box (44) for connection to the electrical supply network or an electric motor regulating circuit.

## Patentansprüche

1. Pumpenaggregat, dessen elektrischer Induktionsmotor einen Stator (20) und einen im Innern eines Luftspaltrohres (9) unter Abdichtung an einem Gehäuse (1) des Pumpenrotors (2) freitragend angeordneten Rotor (4) umfaßt, wobei ein vorderes Lager (5) dem Rotor (4) des Elektromotors und dem Pumpenrotor (2) gemeinsam ist und der Stator (20) in einer über dem Magnetkreis (31) und den Wicklungswindungen (33, 34) des Motors geschlossenen und über dem gesamten Luftspaltquerschnitt offenen isolierenden Hülle zur Aufnahme des im Luftspaltrohr (9) angeordneten Rotors (4) eingekapselt ist, dadurch gekennzeichnet, daß die genannte isolierende Hülle an den Magnetkreis angeformt ist und auf jeder der Statorendflächen wenigstens eine zum Luftspalt konzentrische Hülse (35, 36; 37, 38) aufweist, welche die Spulenköpfe oder -enden (34) umgibt und mit einer isolierenden Endhaube (41, 42), die an dieser/diesen Hülse/n angeordnet ist, zur Einkapselung der Spulenköpfe (34) zusammenwirkt, und daß der Stator (20) unter Anlage seiner Luftspaltfläche (27) am Luftspaltrohr (9) und Anlage durch die Haube und/oder die vordere isolierende Endhülse (41; 35, 36) am Gehäuse (1) des Pumpenrotors (2) auf das Luftspaltrohr (9) abnehmbar aufgeschoben ist, wogegen die hintere isolierende Endhaube (42) einen Flansch (43) aufweist, der sich an einem mit dem Luftspaltrohr (9) fest verbundenen Bock (10) des hinteren Rotorlagers (7) abstützt.

2. Pumpenaggregat nach Anspruch 1, dadurch gekennzeichnet, daß die genannte hintere isorlierende Haube (42) sich am genannten Bock (10) mittels einer ringförmigen Dichtung (22) abstützt, wogegen die genannte Hülse (35, 36) und/oder die vordere isolierende Haube (41) unter Abdichtung an das Gehäuse (1) des Pumpenrotors in der Weise angeflanscht ist, daß der Statorkreis nach außen isoliert ist.

3. Pumpenaggregat nach Anspruch 2, dadurch gekennzeichnet, daß ein abnehmbares Verschlußteil (12) der hinteren, mit dem Fluidkreis der Pumpe in Verbindung stehenden Kammer (13) der Welle des Elektromotors (3) an den genannten Bock (10) des hinteren Lagers angeschraubt ist und sich unter Abdichtung an der ringförmigen Dichtung (22) abstützt, die der dichten Abstützung der hinteren isolierenden Haube (42) am Lagerbock (10) dient.

4. Pumpenaggregat nach wenigstens einem der Ansprüche 1 bis 3, dadurch gekennzeichnet, daß die Hülse (35) oder die vordere isolierende Endhaube (41) unter Reibschluß an einer ringförmigen Elastomerschicht (19) anliegt, die im Innern eines mit dem Pumpengehäuse (1) fest verbundenen Halterings (18) vorgesehen ist, derart, daß an der Stirnfläche (15) des Pumpengehäuses (1) eine dichte Verbindung und der reibschlüssige Halt des vor seiner Anlage am Pumpengehäuse frei drehbar ausrichtbaren Stators (20) zustande kommen.

5. Pumpenaggregat nach wenigstens einem der Ansprüche 1 bis 4, dadurch gekennzeichnet, daß wenigstens eine der Hülsen (35, 36; 37, 38) oder Endhauben (41, 42) von den Verbindungsdrähten der Wicklungen (34) des Stators mit einer externen Stromversorgung (bei 46) durchdrungen ist.

6. Pumpenaggregat nach wenigstens einem der Ansprüche 1 bis 5, dadurch gekennzeichnet, daß wenigstens eine der isolierenden Endhülsen mit einem das Joch (31a) des Magnetkreises (31) von außen umschließenden isolierenden Gestell (40) verbunden ist und einen Anschlußkasten (44) zum elektrischen Netz und/oder zu einem Regelnetz des Elektromotors trägt.
